# EUROPEAN PATENT APPLICATION

(11) **EP 4 378 653 A1**
(43) Date of publication of application: **05.06.2024**
(21) Application number: 22210339.2
(22) Date of filing: 29.11.2022
(51) Int. Cl.: B29B 9/06, B29B 9/12, B29B 7/58, B29C 48/00, B29C 64/00, B29C 48/335, B29B 7/38, B29B 7/82

(54) **GRANULATING DEVICE FOR PRODUCING PELLETS OF A POLYMER CORE BEING COATED WITH AT LEAST ONE LAYER OF A POLYMERIC AND/OR NON-POLYMERIC MATERIAL, RELATED METHODS AND PELLET**

(71) Applicant: Sulzer Management AG, 8401 Winterthur (CH)
(72) Inventor: The designation of the inventor has not yet been filed
(74) Representative: Henkel & Partner mbB

(57) **Abstract**

Granulating device for granulating polymer strands to pellets made of a polymer core being coated with at least one layer of a polymeric and/or non-polymeric material, wherein the granulating device comprises at least one melt providing device, a die having an inlet side and an outlet side, wherein the die comprises at least one inlet line for the polymer forming the polymer core being connected with a plurality of first-kind die channels, at least one inlet line for the polymeric and/or non-polymeric material being connected with a plurality of second-kind die channels, at least one inlet line and at least one outlet line for heating medium, wherein the at least one inlet line and the at least one outlet line for the heating medium are connected with each other by one or more heating channels, wherein preferably at least 50% of the combined die channels are at least partially surrounded by a heating channel, and at least one granulating blade being arranged on the outlet side of the die allowing to cut the strands exiting the die outlets into pellets.

## Description

The present invention relates to a granulating device for granulating polymer strands to pellets made of a polymer core being coated with at least one layer of a polymeric and/or non-polymeric material.

Granulation of polymer strands to polymer pellets is a well-known process in the chemical and compounding industry. Apart from pellets of non-expandable and non-expanded polymer, often thereby expandable pellets containing compressed blowing agent being dispersed in the polymer, such as expandable polystyrene pellets, or expanded pellets, i.e., pellets having been expanded (or foamed, respectively) with a blowing agent, such as expanded polylactic acid pellets, are produced. Typically, the polymer, if necessary admixed with a blowing agent, is fed into and pressed through the channels of a die and through the die outlets out of the die. One or more rotating blades are arranged directly downstream of the die outlets of the die, which cut the strands being continuously pressed through the outlets of the die into pellets, such as expanded pellets, having a diameter of, for instance, about 5 mm. Simultaneously with leaving the die outlets, the polymer melt strands are cooled so as to solidify the polymer melt to solid polymer. This may be for instance achieved by underwater granulation, in which cool water flows downstream of the die outlets of the die so that the polymer melt is pressed as polymer melt strands through the die outlets into the water bath, in which the polymer strands cool and solidify and are cut by the one or more rotating blades into the pellets. Granulation could also be achieved by water-ring granulation or hot die face granulation systems. Often not only a polymer melt made of one polymer, which optionally includes a blowing agent, is extruded and pressed through the die as polymer melt strands, but polymer melt strands each containing a core made of one polymer, which optionally includes a blowing agent, wherein the core is coated with one or more further layers of a polymeric and/or non-polymeric material are extruded.

A crucial part of the granulation device is the die, comprising a die body and a die plate, which comprises one or more and in practice a plurality of outlets. The polymer melt should in theory have within the die a temperature being only slightly above the melting point of the polymer in order to keep the energy costs of the granulation process as low as possible. Moreover, in the case of a polymer melt including a blowing agent, the temperature of the polymer melt at the die outlets shall be as close as possible to the melting point of the polymer so that the polymer melt solidifies as fast as possible after leaving the die outlets, in order - in the case of the generation of expandable pellets - to solidify before the mixture of polymer and blowing agent foams or in order - in the case of the generation of expanded pellets - to solidify in such a time that a homogenous foaming of the mixture of polymer and blowing agent is achieved, before or while the strands are cut into the pellets. Furthermore, the temperature across the plurality of the die outlets should be as homogenous as possible in order to obtain pellets with identical or at least very similar sizes, which requires that each of the single strands leaves it die outlet with the same temperature and temperature profile across the cross-section of the strand. However, it must be reliably avoided that the polymer melt already solidifies in the die outlets, because this would lead to a clogging of the die outlets, which would stop or at least severely disturb the granulation process and lead to changes in the pellet size distribution. Since the outlet side of the die is cooled, for instance in case of underwater granulation by the cool water circulating around the outlet side of the die, there is a temperature gradient within the die. More specifically, the temperature gradually decreases in the end section of the die in the direction to the die outlets. Also, within the channels, through which the polymer melt is led through the die to the die outlets, a temperature gradient exists, wherein the temperature decreases from the outer periphery of a channel across its cross-section into its interior. If the temperature within at least a portion of the polymer melt strand should be too low within the outlets, an undesired solidification within the die outlets and thus clogging of the die outlets may occur. Therefore, it would be desirable to adjust and maintain during the granulation process a precise and homogeneous temperature profile within the die and across the outlet side of the die assuring that a clogging of die outlets of the die with solidified polymer is reliably avoided, in order to thereby improve the energy efficiency of the granulation process and in order to assure a good and homogenous foaming of the polymer melt in the case of the production of expanded polymer pellets. The targeted control of the temperature of the die and of the polymer melt becomes even more critical, if small sized pellets are produced, since then small sized die outlets are used, which are due to their small size or diameter, respectively, particularly prone to the aforementioned problems, such as clogging due to polymer solidifying within the die outlets.

In order to heat the die, typically one or more oil channels are provided in the die body, through which heating oil flows. However, the dies used in the granulation devices of the prior art do not satisfactorily allow a precise temperature control of the die and in particular not in the case of a die for a granulation device for producing pellets consisting of a polymer core being coated with at least one layer of a polymeric and/or non-polymeric material. This is, among others, due to the fact that conventional dies are fabricated using conventional manufacturing technologies, such as milling, which are connected with significant manufacturing restrictions. Therefore, the shape of oil channels is limited to simple pathways and cannot be easily guided in between or around the polymer channels to locally control the melt temperature. This is in particular valid for the granulation of polymer strands to pellets made of a polymer core being coated with at least one layer of a polymeric and/or non-polymeric material, which requires two different kinds of polymer channels in the die.

In view of this, the object underlying the present invention is to provide a granulating device for granulating polymer strands to pellets made of a polymer core being coated with at least one layer of a polymeric and/or non-polymeric material, which allows to adjust and maintain during the granulation process a precise and homogeneous temperature profile within the die and across the outlet side of the die and thus a precise temperature control of the die, which allows the production of pellets having a uniform size and comprising a polymer core being coated with at least one layer of a polymeric and/or non-polymeric material, and which in particular allows the production of expanded pellets of a polymer core being coated with at least one layer of a polymeric and/or non-polymeric material having a comparable small size of 1 to 5 mm.

In accordance with the present invention, this object is solved by providing a granulating device for granulating polymer strands to pellets made of a polymer core being coated with at least one layer of a polymeric and/or non-polymeric material, wherein the granulating device comprises:
- at least one melt providing device (such as an extruder),
- a die having an inlet side and an outlet side, with the inlet side being connected with the melt providing device, wherein the die comprises:
   - at least one inlet line for the polymer forming the polymer core being connected with a plurality of first-kind die channels, wherein each of the first-kind die channels comprises an end section ending at the outlet side of the die,
   - at least one inlet line for the polymeric and/or non-polymeric material being connected with a plurality of second-kind die channels, wherein each of the second-kind die channels comprises an end section ending at the outlet side of the die, wherein at least 50% and preferably each of the end sections of the second-kind die channels surrounds an end section of a first-kind die channel so that the end section of the first-kind die channel and the end section of the second-kind die channel form a combined die channel ending at the outlet side of the die as die outlet,
   - at least one inlet line and at least one outlet line for heating medium, wherein the at least one inlet line and the at least one outlet line for the heating medium are connected with each other by one or more heating channels, wherein preferably at least 50% of the combined die channels are at least partially surrounded by a heating channel, and
- at least one granulating blade being arranged on the outlet side of the die allowing to cut the strands exiting the die outlets into pellets.

This solution bases on the surprising finding that by using sophisticated production processes, such as additive manufacturing processes, for the production of the die of the granulating device the heating medium channels may be formed so that the heat is much more evenly distributed to and across the polymer channels, i.e. to and across the above-mentioned first-kind die channels and to and across second-kind die channels, namely by providing the heating channels so that at least 50% of the combined die channels are at least partially surrounded by a heating channel. Thereby, the first-kind and second-kind die channels can be separately heated, and the heating medium channels may be arranged nearer to the first-kind and second-kind channels. This allows to adjust and maintain a precise temperature control of the die during the granulation process, which allows the production of pellets of a polymer core being coated with at least one layer of a polymeric and/or non-polymeric material having a uniform size and in particular allows the production of expanded pellets of a polymer core being coated with at least one layer of a polymeric and/or non-polymeric material having a comparable small size of 1 to 5 mm or of 2 to 5 mm. In particularly, a clogging of single die outlets with solidifying polymer is reliably avoided thereby. In addition, the use of sophisticated production processes, such as additive manufacturing processes, for the production of the die of the granulating device allows further advantageous measures improving the temperature control of the die described further below, such as the provision of insulation pockets close to the outlet side of the die and the integration of a wear protect layer on the outlet side of the die, which is in contact with the at least one granulating blade.

The outlet side of the die may be arranged opposite to the inlet side of the die.

In accordance with the present invention, the die comprises first-kind die channels for pressing the polymer forming the polymer core of the granulated pellets through the die and its die outlets and second-kind die channels for pressing the polymeric and/or non-polymeric material forming the layer coating the polymer core through the die and its die outlets. The terms "first-kind" and "second-kind" are used in this context only to differentiate the two channel types. Both, the first-kind die channels, and the second-kind die channels comprise an end section ending at the outlet side of the die plate. In other words, the end section of a first-kind die channel and the end section of a second-kind die channel are the most downstream ends of the channels extending from a location inwards the die body until the die outlet. Each of the end sections of the second-kind die channels surrounds an end section of a first-kind die channel so that the end section of the first-kind die channel and the end section of the second-kind die channel form a combined die channel ending at the outlet side of the die as die outlet. In other words, each of the combined die channels is one channel being the sum of the, seen in the cross-section of the die, a (seen in the cross-section of the die, central) end section of a first-kind die channel and its surrounding end section of a second-kind die channel. During the operation of the die, the polymer forming the polymer core of the granulated pellets is pressed through the first-kind die channels and the polymeric and/or non-polymeric material forming the layer coating the polymer core is pressed through the second-kind die channels. On account of the inertia of the polymer melt or of the mixture of the polymer melt and the blowing agent forming the polymer core of the granulated pellets, on account of the pressure with which it is pressed through the first-kind die channels and on account of the temperature of being slightly above its melting point with which it is pressed through the first-kind die channels, the polymer melt or the mixture of the polymer melt and the blowing agent being pressed through the first-kind die channels does not or at least not notably mix in the combined die channels with the polymeric and/or non-polymeric material being pressed through the second-kind die channels. Except for its end section, each first-kind die channel is surrounded over its whole peripheral surface by a die wall, i.e., by the material of the die, whereas each second-kind die channel is over its whole peripheral surface including that of its end section surrounded by a die wall, i.e. by the material of the die.

Preferably, at least the end sections of the first-kind die channels and at least the end sections of the second-kind die channels have a circular cross-section, wherein each of the end sections of the second-kind die channels concentrically surrounds an end section of a first-kind die channel so as to form the combined die channel ending at the outlet side of the die plate as die outlet.

In accordance with the present invention, at least 50% of the end sections of the second-kind die channels surround an end section of a first-kind die channel so that the end section of the first-kind die channel and the end section of the second-kind die channel form a combined die channel ending at the outlet side of the die plate as die outlet. Good results are in particular obtained, when at least 70%, preferably at least 80%, more preferably at least 90%, still more preferably at least 95%, yet more preferably at least 99% and most preferably each of the end sections of the second-kind die channels surrounds an end section of a first-kind die channel so that the end section of the first-kind die channel and the end section of the second-kind die channel form a combined die channel ending at the outlet side of the die plate as die outlet.

In a further development of the idea of the present invention, it is suggested that at least 50%, preferably at least 80%, more preferably at least 90%, still more preferably at least 95%, yet more preferably at least 99% and most preferably all of the combined die channels taper in the axial direction to the die outlet. The axial direction means the axial direction of the die, which is the direction from the inlet side to outlet side of the die. For instance, any of the combined die channels may gradually or in one or more steps taper from its upstream end to its downstream end (which is the die outlet). Alternatively, any of the combined die channels may have a first upstream section having the same size or diameter, respectively, and a second downstream section, which gradually tapers from its upstream end to its downstream end (which is the die outlet). More specifically, in this variant any of the combined die channels may have a first cylindrical upstream section and a second downstream section, which gradually or in one or more steps tapers from its upstream end to its downstream end.

Yet alternatively, any of the combined die channels may have a first upstream section, which gradually or in one or more steps tapers from its upstream end to its downstream end, and downstream thereof a second section having the same size or diameter, respectively. More specifically, in this variant any of the combined die channels may have a first section, which gradually or in one or more steps tapers from its upstream end to its downstream end, and a second cylindrical downstream section. Still alternatively, any of the combined die channels may step-wise taper from its upstream end to its downstream end (which is the die outlet), i.e. it may have a first upstream section having over its length the same size or diameter, respectively, a second section downstream thereof, which gradually or in one or more steps tapers from its upstream end to its downstream end, and a third section downstream thereof having over its length the same size or diameter, respectively. More specifically, in this variant any of the combined die channels may have a first cylindrical upstream section, a second section, which gradually or stepwise (i.e. in one or more steps) tapers from its upstream end to its downstream end, and a third cylindrical section downstream thereof.

Preferably, at least 50%, more preferably at least 80%, even more preferably at least 90%, still more preferably at least 95%, yet more preferably at least 99% and most preferably all of the die outlets have a size or diameter, respectively, of 0.1 to 5 mm, preferably of 0.2 to 3 mm, more preferably of 0.5 to 1.5 mm and most preferably of 0.8 to 1.2 mm, such as of about 1.0 mm. Thereby, comparably small pellets and in particular expanded pellets having a small size or diameter, respectively, of 1 to 5 mm or of 2 to 5 mm may be obtained. In the preferred case that the die outlet has, seen in cross-section, a circular form its diameter is concerned, and in the case the die outlet has, seen in cross-section, a non-circular form its size is concerned, with size meaning in this connection the line having the longest length fitting into the die outlet. In the case of a tapered combined die channel, the smallest size or diameter, respectively, of the tapered combined die channel is in the aforementioned range, whereas the highest size or diameter, respectively, of the tapered combined die channel may be more than one-times up to twenty-times higher than the smallest size or diameter, respectively.

In accordance with the present invention, at least 50% of the combined die channels are at least partially surrounded by a heating channel. Preferably, at least 70%, more preferably at least 80%, even more preferably at least 90%, still more preferably at least 95%, yet more preferably at least 99% and most preferably all of the combined die channels are at least partially surrounded by a heating channel. A combined die channel being at least partially surrounded by a heating channel means in this connection that at least a portion of the outer circumference of at least a section of the combined die channel is surrounded by a heating channel. Section means in this connection any section of the combined die channel extending from a point in the die in direction of the downstream end of the combined die channel, i.e., in direction of the die outlet. Preferably, the section, from which at least a portion of its outer circumference is surrounded by a heating channel, extends over 10 to 90%, preferably 15 to 60% and most preferably 20 to 45% of the length of the combined die channel, wherein length means the dimension in the flow direction of the combined die channel. For example, the combined die channels are at least partially surrounded by a heating channel in an area extending, seen in the axial direction of the die, from a location being 1 to 30 mm distant from the outlet side of the die plate for 1 to 100 mm inwards into the die and more preferably from a location being 1 to 15 mm distant from the outlet side of the die plate for 3 to 60 mm inwards into the die.

In addition, it is preferred that the heating channel surrounds at least 10% of the outer circumference of the aforementioned section of the combined die channel. In a first preferred variant of this embodiment, it is suggested that only a medium-sized portion of the outer circumference of the aforementioned section of the combined die channel is surrounded by a heating channel, such as preferably that at least 25%, more preferably at least 40% and most preferably at least 50% of the outer circumference of the aforementioned section of the combined die channel. In a second preferred variant of this embodiment, it is suggested that all or at least a major portion of the outer circumference of the aforementioned section of the combined die channel is surrounded by a heating channel, such as preferably that at least 75%, more preferably at least 90%, even more preferably at least 95% and most preferably all of the outer circumference of the aforementioned section of a combined die channel is surrounded by a heating channel.

For instance, good results are obtained, when at least 25% of the outer circumference of a section extending over 10 to 90% of the length of the combined die channel is surrounded by a heating channel, or when at least 25% of the outer circumference of a section extending over 15 to 60% of the length of the combined die channel is surrounded by a heating channel, or when at least 25% of the outer circumference of a section extending over 20 to 45% of the length of the combined die channel is surrounded by a heating channel, or when at least 50% of the outer circumference of a section extending over 10 to 90% of the length of the combined die channel is surrounded by a heating channel, or when at least 50% of the outer circumference of a section extending over 15 to 60% of the length of the combined die channel is surrounded by a heating channel, or when at least 50% of the outer circumference of a section extending over 20 to 45% of the length of the combined die channel is surrounded by a heating channel, or when at least 75% of the outer circumference of a section extending over 10 to 90% of the length of the combined die channel is surrounded by a heating channel, or when at least 75% of the outer circumference of a section extending over 15 to 60% of the length of the combined die channel is surrounded by a heating channel, or when at least 75% of the outer circumference of a section extending over 20 to 45% of the length of the combined die channel is surrounded by a heating channel, or when all of the outer circumference of a section extending over 10 to 90% of the length of the combined die channel is surrounded by a heating channel, or when all of the outer circumference of a section extending over 15 to 60% of the length of the combined die channel is surrounded by a heating channel, or when all of the outer circumference of a section extending over 20 to 45% of the length of the combined die channel is surrounded by a heating channel.

Again, in accordance with the present invention, at least 50% of the combined die channels are at least partially surrounded by a heating channel. Being surrounded by a heating channel means in this connection that, seen in the cross-section of the die, preferably the distance between the outer circumference of a combined die channel and the outer circumference of a heating channel is in the area, in which the combined die channel is surrounded by the heating channel, 1 to 10 mm and preferably 3 to 6 mm.

In order to achieve the aforementioned at least partial surrounding of the combined die channels by a heating channel, it is proposed in a further development of the idea of the present patent application that the one or more heating channels have each a meander-form and preferably a serpentine-form. Thereby, the one or more heating channels can be easily led close to each of the combined die channels and the size of the sections of each of the combined die channels being surrounded by the one or more heating channels can be easily adjusted by the form and size of the meander or preferably serpentine. The one or more heating channels having each a meander-form and preferably a serpentine-form may be connected directly with the inlet line for heating medium and with the outlet line for heating medium. Alternatively, one or more other lines may be arranged between the one or more heating channels having each a meander-form and preferably a serpentine-form and the inlet line for heating medium and/or the outlet line for heating medium.

An alternative embodiment for achieving the aforementioned at least partial surrounding of the combined die channels by a heating channel is that the die comprises one inlet line and one outlet line for heating medium, which are both connected with each other by an annular heating channel, wherein from the annular heating channel a plurality of heating channels split-off, each of which at least partially and preferably completely surrounding at least a section of a combined die channel. Thus, the annular heating channel functions as supply channel to supply the heating medium to the heating channels splitting-off therefrom (and preferably having a smaller diameter than the annular heating channel), whereas the heating channels splitting-off from the annular heating channel have the function to adjust the target temperature profile within the die and within the channels surrounded by the heating channels. The heating channels splitting-off from the annular heating channel and surrounding the combined die channels may have any suitable form. For instance, the heating channels splitting-off from the annular heating channel and surrounding the combined die channels may comprise a section in form of a hollow body surrounding the outer circumference of a section of a combined die channel, wherein this section is connected with a further section connecting the hollow body-section with the annular heating channel. For example, each of the heating channels splitting-off from the annular heating channel and surrounding the combined die channels may comprise a section in the form of a hollow cylinder concentrically surrounding the outer circumference of a section of a combined die channel in a distance of 1 to 10 mm and preferably of 3 to 6 mm, wherein the hollow cylinder is connected with a further section connecting the hollow cylinder with the annular heating channel. Each of the heating channels splitting-off from the annular (supply) heating channel may extend with its end being opposite to that splitting-off from the annular (supply) heating channel individually to the outlet line for heating medium and is connected with its most downstream end with the outlet line for heating medium. Alternatively, some or each of the heating channels splitting-off from the annular (supply) heating channel may extend with its end being opposite to that splitting-off from the annular (supply) heating channel to a collection channel, which in turn is connected with the outlet line for heating medium. As described in the below embodiment, the collection channel may be an annular channel.

In accordance with still another alternative embodiment for achieving the aforementioned at least partial surrounding of the combined die channels, the die comprises one inlet line and one outlet line for heating medium, which are both connected with each other by two annular heating channels, wherein the two annular heating channels are arranged, seen in the axial direction of the die, in a distance to each other and are connected with each other by a plurality of heating channels, each of which at least partially and preferably completely surrounding a section of a combined die channel. More specifically, a first of the annular heating channels, which is connected with the inlet line for heating medium, functions as supply channel, whereas the second of the annular heating channels, which is connected with the outlet line for heating medium, functions as collection channel. For instance, the heating channels splitting-off from the annular heating channel and surrounding the combined die channels may comprise a section in form of a hollow body surrounding the outer circumference of a section of a combined die channel, wherein this section is connected with a first further section connecting the hollow body-section with one of the two annular heating channels and is connected with a second further section connecting the hollow body-section with the other of the two annular heating channels. For example, the hollow body is a hollow cylinder. The distance between the two annular heating channels may be 20 to 300 mm and preferably 50 to 200 mm. Preferably, the heating channels have, except for the optional aforementioned sections having the form of a hollow body, such as of a hollow cylinder, a circular cross-section and a diameter of 3 to 30 mm and more preferably of 10 to 20 mm. Again, each of the heating channels splitting-off from the annular heating channel and surrounding the combined die channels may comprise a section in the form of a hollow cylinder concentrically surrounding the outer circumference of a section of a combined die channel in a distance of 1 to 10 mm and preferably of 3 to 6 mm.

In still another alternative embodiment for achieving the aforementioned at least partial surrounding of the combined die channels, the die comprises one inlet line for heating medium, wherein from the inlet line a plurality of (preferably non-annular) heating channels split-off, each of which at least partially and preferably completely surrounding at least a section of a combined die channel. Again, the heating channels splitting-off from the inlet line have the function to adjust the target temperature profile within the die and within the channels surrounded by the heating channels. The heating channels splitting-off from the inlet line and surrounding the combined die channels may have any suitable form. For instance, the heating channels splitting-off from the inlet line for heating medium and surrounding the combined die channels may comprise a connecting section and a section in form of a hollow body surrounding the outer circumference of a section of a combined die channel, wherein each connecting section is arranged between the inlet line for heating medium and a section in form of a hollow body. Each of the sections in the form of a hollow cylinder concentrically surrounding an outer circumference of a section of a combined die channel preferably in a distance of 1 to 10 mm and more preferably of 3 to 6 mm. Each heating channel section in the form of a hollow body of this embodiment is connected with its end being opposite to that being connected with the connecting section with a collection channel, which may have the form of an annular ring. The collection channel is, in turn, connected with the outlet for heating medium. Again, each hollow body preferably has the form of a hollow cylinder having a circular cross-section and a diameter of 3 to 30 mm and more preferably of 10 to 20 mm. Moreover, it is preferred that each of the hollow cylinders concentrically surround the outer circumference of a section of a combined die channel in a distance of 1 to 10 mm and preferably of 3 to 6 mm.

The melt providing device is preferably an extruder.

The present invention is not particularly limited concerning the number of inlet lines of the die for the polymer forming the polymer core being connected with a plurality of first-kind die channels. For instance, each of the first-kind die channels may be connected with its own inlet. Alternatively, the die may comprise one inlet line for the polymer forming the polymer core, wherein the inlet line is connected with the plurality of first-kind die channels and preferably splits-off into the plurality of first-kind die channels. Still alternatively, some of the first-kind die channels may be connected with their own inlet line, while others may be connected with one inlet line and preferably split-off from one inlet line. In each of these embodiments, the inlet line(s) may have a rectangular, square, circular, oval or polygonal cross-section. However, it is preferred that the inlet line(s) has/have a circular cross-section. The inlet line(s) for the polymer forming the polymer core is preferably connected with a (first) extruder (as melt providing device).

Good results are, however, obtained when the die comprises one inlet line for the polymer forming the polymer core, wherein the inlet line extends into the die (body) for a certain distance, before it splits into the first-kind die channels at a point being located at a distance of 20 to 200 mm and preferably of 50 to 100 mm distant from the outlet side of the die.

It is further preferred that the die outlets are arranged at least in an annular ring area of the outlet side of the die, whereas the one or more inlet lines preferably enter(s) the inlet side of the die, seen in the cross-section of the die, in its central area. Therefore, if the die comprises only one or a few inlets for the polymer forming the polymer core, which preferably enter(s) the inlet side of the die in its central area, the first-kind die channels being connected with the inlet line(s) or even splitting-off from the inlet line(s) need to comprise a section leading into the radial outer part of the die. Therefore, it is preferred in particular if the die comprises one inlet, from which the first-kind die channels split-off, that the first-kind die channels each comprise a first section being connected with the inlet line and extending in an angle of 10 to 90° and preferably 30 to 60° or 70 to 90° with regard to the axial direction of the die, a second section having a first end being connected with the first section at its end being opposite to the end of the first section being connected with the inlet and having a second end, wherein the second section is curved so that its second end extends at least essentially parallel to the axial direction of the die, and the end section (which form with the end section of a second-kind die channel a combined die channel) being connected with the second end of the second section. At least essentially parallel to the axial direction means in this connection that the second end of the second section of the first-kind die channels extends in an angle of -20 to +20°, preferably -10 to +10°, more preferably -5 to +5° and most preferably 0° with regard to the axial direction of the die.

The first-kind die channels may have a rectangular, square, circular, oval or polygonal cross-section. However, it is preferred that the first-kind die channels have a circular cross-section. Alternatively, it is possible that only a section of the first-kind die channels has a circular cross-section, such as in the aforementioned embodiment the second section.

The total number of first-kind die channels in the die depends on the throughput of the first-kind die channels, wherein each first-kind die channel preferably has a throughput of 0.5 to 4 kg/h and more preferably between 0.8 and 2.5 kg/h.

Also concerning the number of inlet lines of the die for the polymeric and/or non-polymeric material, the present invention is not particularly limited. For instance, each of the second-kind die channels may be connected with its own inlet. Alternatively, the die may comprise one inlet line for the polymeric and/or non-polymeric material, wherein the inlet line is connected with the plurality of second-kind die channels and preferably splits-off into the plurality of second-kind die channels. Still alternatively, some of the second-kind die channels may be connected with their own inlet line, while others may be connected with one inlet line and preferably split-off from one inlet line. In each of these embodiments, the inlet line(s) may have a rectangular, square, circular, oval or polygonal cross-section. However, it is preferred that the inlet line(s) has/have a circular cross-section. The inlet line(s) for the polymeric and/or non-polymeric material may be connected with a (second) extruder (as melt providing device).

Good results are, however, obtained when the die comprises one inlet line for the polymeric and/or non-polymeric material, wherein the inlet line for the polymeric and/or non-polymeric material extends into the die (body) for a certain distance, before it splits into the second-kind die channels at a point being located at a distance of 20 to 200 mm and preferably of 50 to 100 mm distant from the outlet side of the die.

The inlet line(s) for the polymeric and/or non-polymeric material may enter the die via the inlet side of the die or via the side of the die, which is in the case that the die has, as usual, a circular cross-section the peripheral area of the die.

In particular for the preferred embodiment, in which the die outlets are arranged at least in an annular ring area of the outlet side of the die plate, and that the die comprises one inlet for the polymeric and/or non-polymeric material entering the die via the inlet side of the die, it is preferred that the second-kind die channels each comprise a first section being connected with the inlet line and extending in an angle of 1 to 90° and preferably 1 to 20° with regard to the axial direction of the die, a second section having a first end being connected with the first section at its end being opposite to the end of the first section being connected with the inlet and having a second end, wherein the second section is curved so that its second end extends at least essentially parallel to the axial direction of the die, and the end section (which form with the end section of a first-kind die channel a combined die channel) being connected with the second section. Again, at least essentially parallel to the axial direction means in this connection that the second end of the second section of the second-kind die channels extends in an angle of -20 to +20°, preferably -10 to +10°, more preferably -5 to +5° and most preferably 0° with regard to the axial direction of the die. At least the second sections of the second-kind die channels have preferably a cylindrical form.

In accordance with an alternative preferred embodiment of the present invention, the die comprises one inlet line for the polymeric and/or non-polymeric material entering the die at its side, wherein the inlet line is connected with an annular ring channel, wherein from the annular ring channel a plurality of the second-kind die channels split-off. The second-kind die channels may comprise each a first section and the end section, which form with the end section of a first-kind die channel a combined die channel, wherein the first section connects the end section of the second-kind die channels with the annular ring channel functioning as a supply channel to supply the polymeric and/or non-polymeric material to the second-kind die channels splitting-off therefrom (and preferably having a smaller diameter than the annular ring channel). The first sections of the second-kind die channels have preferably a cylindrical form.

In accordance with still an alternative preferred embodiment of the present invention, the die comprises one inlet line for the polymeric and/or non-polymeric material entering the die at its side, wherein the inlet line splits-off in two to four lines, preferably two lines, wherein the second-kind die channels split-off from these lines. Also, the second-kind die channels of this embodiment may comprise each a first section and the end section, which form with the end section of a first-kind die channel a combined die channel, wherein the first section connects the end section of the second-kind die channels with one of the lines, which splits-off form the inlet line. The first sections of the second-kind die channels have preferably a cylindrical form.

In accordance with the present invention, the die of the granulating comprises at least one inlet line for the polymer forming the polymer core being connected with a plurality of first-kind die channels, wherein each of the first-kind die channels comprises an end section ending at the outlet side of the die plate, and at least one inlet line for the polymeric and/or non-polymeric material being connected with a plurality of second-kind die channels, wherein each of the second-kind die channels comprises an end section ending at the outlet side of the die plate, wherein at least 50% and preferably each of the end sections of the second-kind die channels surrounds an end section of a first-kind die channel so that the end section of the first-kind die channel and the end section of the second-kind die channel form a combined die channel ending at the outlet side of the die plate as die outlet. However, the die may comprise one or more further inlets for one or more further polymeric and/or non-polymeric material to be coated as further layer(s) onto the coating layer produced by the polymeric and/or non-polymeric material being pressed through the second-kind die channels. In such an embodiment, the die comprises at least one further inlet line for (a second) polymeric and/or non-polymeric material being connected with a plurality of third-kind die channels, wherein each of the third-kind die channels comprises an end section ending at the outlet side of the die plate, wherein at least 50% of the end sections of the third-kind die channels surround an end section of a first-kind die channel and a surrounding end section of a second-kind die channel so that the end section of the first-kind die channel, the end section of the second-kind die channel and the end section of the third-kind die channel form a combined die channel ending at the outlet side of the die plate as die outlet. It is preferred in this embodiment that at least 70%, preferably at least 80%, more preferably at least 90%, still more preferably at least 95%, yet more preferably at least 99% and most preferably each of the end sections of the third-kind die channels surrounds an end section of a first-kind die channel and a surrounding end section of a second-kind die channel so that the end section of the first-kind die channel, the end section of the second-kind die channel and the end section of the third-kind die channel form a combined die channel ending at the outlet side of the die plate as die outlet.

In accordance with another embodiment of the present invention, the die comprises at least one or more further inlet lines for (a third or higher-numbered) polymeric and/or non-polymeric material(s) being connected with a plurality of fourth-kind die channels and optional further-kind die channels, wherein each of the fourth-kind die channels and optional further-kind die channels comprises an end section ending at the outlet side of the die plate, wherein at least 50% of the end sections of the fourth-kind die channels and optional further-kind die channels surround an end section of a first-kind die channel, a surrounding end section of a second-kind die channel and a surrounding end section of a third-kind die channel so that the end section of the first-kind die channel, the end section of the second-kind die channel, the end section of the third-kind die channel and the end section of the fourth-kind die channel and optional further-kind die channels form a combined die channel ending at the outlet side of the die plate as die outlet. It is preferred in this embodiment that at least 70%, preferably at least 80%, more preferably at least 90%, still more preferably at least 95%, yet more preferably at least 99% and most preferably each of the end sections of the fourth-kind die channels and optional further-kind die channels surrounds an end section of a first-kind die channel, a surrounding end section of a second-kind die channel and a surrounding end section of a third-kind die channel so that the end section of the first-kind die channel, the end section of the second-kind die channel, the end section of the third-kind die channel and the end section of the fourth-kind die channel and optional further-kind die channels form a combined die channel ending at the outlet side of the die plate as die outlet.

In accordance with a further particularly preferred embodiment of the present invention, one or more insultation pockets are provided in the die and particularly preferably close to, but upstream of the outlet side of the die.

For example, the insulation pocket(s) may be one or more hollow bodies, in particular of the aforementioned geometries and dimensions, being filled with air as insulating material.

The die preferably has, seen in cross-section, a circular shape or an annular ring shape with the central portion of the annular ring being open. The diameter of the die depends on the total throughput trough the die, on the size of the produced granules and on the distance between the individual die channels at the outlet, wherein each first-kind die channel preferably has a throughput of 0.5 to 4 kg/h and more preferably between 0.8 and 2.5 kg/h, and wherein preferably the distance between the individual die channels at the outlet is larger than 0.5 mm and more preferably larger than 1 mm.

The die may be made of a metal, preferably of a steel or a nickel-based alloy, such as Hastalloy.

In a further development of the idea of the present invention, it is suggested that the die comprises a wear protection layer on the outlet side of the die plate. The wear protection layer is preferably a thin surface coating, a build-up welding layer or a hard-metal alloy part which is connected to the die plate. The wear protection layer is more preferably made of cemented carbides consisting of fine particles of carbide cemented into a composite by a binder metal. The cemented carbide preferably contains tungsten carbide (WC), titanium carbide (TiC) or tantalum carbide (TaC) as the aggregate and a metallic binder serving as the matrix. The thickness of the wear protection layer may be 1 to 5,000 µm and more preferably 10 to 2,000 µm. Such a wear protection layer is preferably provided onto the outlet side of the die plate by spraying, build-up welding or brazing a wear protection onto the die, or even more preferable by an additive manufacturing process. The wear protection layer has the function to protect the outlet side of the die plate against wear due to the contact with the rotating blade.

The granulating blades may be arranged in the granulating device in any known manner. For instance, the granulating device may comprise a blade head comprising one or more radial arms, on which the at least one granulating blade is mounted. The blade head is preferably connected with a rotatable blade shaft for rotationally driving the blade head about an axis of rotation.

The granulation device may further comprise an underwater granulation unit comprising a water chamber for cooling the strands being pressed through the outlet dies. Alternative preferred granulation units are water ring granulation devices and hot die face granulation devices with air cooling.

In a further aspect, the present invention is related to a process for producing an aforementioned granulating device, wherein the die is produced with an additive manufacturing process.

The present invention is not particularly limited concerning the kind of the additive manufacturing process. Good results, however, are obtained when the additive manufacturing process is i) a powder-bed fusion process, ii) a material extrusion process of metals comprising as step 1 the fabrication of a green part using a material extrusion process and as step 2 the debindering and sintering of the green part produced in step 1, iii) a binder jetting process of metals comprising as step 1 the fabrication of a green part using a binder jetting process with metal powder and as step 2 the debindering and sintering of the green part produced in step 1, or iv) a wire- or powder-based laser metal deposition.

The powder-bed fusion process may be a laser powder bed fusion process or an electron powder bed fusion process.

With each of the aforementioned process, also the aforementioned preferred wear protection layer may be provided on the outlet side of the die plate.

In a further aspect, the present invention is related to a process for producing pellets comprising a polymer core being coated with at least one layer of a polymeric and/or non-polymeric material, wherein the process is performed with the above-described granulating device. The process comprises the steps of feeding the polymer forming the polymer core into the at least one inlet line for the polymer forming the polymer core, feeding the polymeric and/or non-polymeric material into the at least one inlet line for the polymeric and/or non-polymeric material, feeding heating medium into the at least one inlet line and withdrawing heating medium from the at least one outlet line for heating medium and cutting the strands exiting the die outlets of the die plate with the at least one granulating blade to the pellets.

As set out above, the polymer forming the polymer core and/or the polymeric and/or non-polymeric material may each comprise a blowing agent. The blowing agent may be a chemical blowing agent or a physical blowing agent. Suitable chemical blowing agents are selected from the group consisting of azodicarbonamide and acid/carbonate blends, like citric acid and sodium bicarbonate and arbitrary combinations of two or more of the aforementioned compounds, whereas suitable physical blowing agents are selected from the group consisting of ethane, propane, butane, iso-butane, pentane, iso-pentane, cyclo-pentane, carbon dioxide and nitrogen as well as halogenated compounds and arbitrary combinations of two or more of the aforementioned compounds.

The polymer forming the polymer core and/or the polymeric material may be any thermoplastic polymer, such as polyethylene, polypropylene, polystyrene, polyester, polylactic acid, polyamide etc., and any copolymer of two or more of the aforementioned polymers.

The non-polymeric material may comprise processing aids, oils etc.

In particular, the following combinations of the polymer composition forming the polymer core and of the polymeric and/or non-polymeric material may each comprise a blowing agent forming the coating may be used:
1. A core of an expanded and/or non-expanded polymer with a coating layer made of a material enabling a molding of otherwise difficult to mold particles. A specific example therefore is a core made of expanded polypropylene with high mechanical properties and a coating layer of polypropylene with a lower melting temperature so as to allow a better molding.
2. A core of an expanded and/or non-expanded polymer with a coating layer made of the same polymer but containing a flame retardant additive. This has the advantage that the flame retardant is less exposed to high shear and temperature when introduced later in the process. A specific example therefore is polystyrene as a core with flame retarded polystyrene as coating.
3. A core of an expanded and/or non-expanded polymer with a coating layer made of a colored material. A specific example therefore is polyethylene uncolored as core with colored polyethylene as coating.
4. A core of an expanded and/or non-expanded polymer with a coating layer made of an additive which provides dipoles and is thus susceptible to heating by microwaves. A specific example therefore is foamed polyethylene as core with polyethylene containing an additive providing a dipol as coating.
5. A core of an expanded and/or non-expanded polymer with a coating layer made of antistatica and/or conductive additives. A specific example therefore is foamed polypropylene as core with polypropylene containing graphite as coating.
6. A core of an expanded and/or non-expanded polymer with a coating layer made of a material enhancing mechanical properties, such as a material with better mechanical properties or containing reinforcement like fibers or similar. A specific example therefore is foamed polypropylene as core with polypropylene containing nanocellulose as coating.
7. A core of an expanded and/or non-expanded polymer with a coating layer made of a material with water soluble properties, which facilitates a later recycling. A specific example therefore is foamed polypropylene as core with polyvinyl alcohol as coating.
8. A core of an expanded and/or non-expanded explosive polymer with a coating layer made of an encapsulation material.
9. A core of an expanded and/or non-expanded polymer with a coating layer, wherein the core or the coating layer is made of a recycled polymer, for example a foamed core of polypropylene and outer layer of recycled polypropylene.
10. A core of an expanded and/or non-expanded polymer with a coating layer containing gas filled or hollow beads.
11. A core of an expanded and/or non-expanded polymer with a coating layer made of a processing aid, such as a lubricant, such as oil.

In a further aspect, the present invention is related to a pellet comprising a polymer core being coated with at least one layer of a polymeric and/or non-polymeric material obtainable with the aforementioned process.

In a further development of the idea of the present invention, it is proposed that the pellet has a diameter of at most 10 mm, preferably of 0.1 to 7 mm, more preferably of 1 to 5 mm and most preferably of 1 to 3 mm. A respective bulk of pellets preferably has a d₅₀-diamter of at most 10 mm, preferably of 0.1 to 7 mm, more preferably of 1 to 5 mm and most preferably of 1 to 3 mm.

In addition, it is preferred that the core and/or any of the at least one layer of a polymeric and/or non-polymeric material is a foam. The cell size of the foam may be below 500 µm.

In addition, it is preferred that the coating layer of polymeric and/or non-polymeric material covers at least 50%, more preferably at least 60%, even more preferably at least 80%, still more preferably at least 90%, yet more preferably at least 95% and most preferably all of the surface of the polymer core.

In a further development of the idea of the present invention, it is suggested that the thickness of the one or more coating layers of polymeric and/or non-polymeric material is preferably equal or less than the radius of the polymer core of the pellet.

Specific embodiments in accordance with the present invention are subsequently described with reference to the appended drawings and by examples.

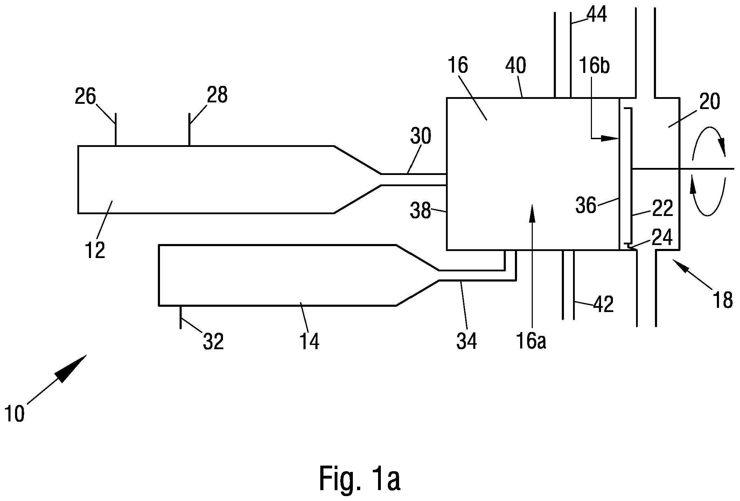

- Fig. 1a: is a schematic view of a granulating device for granulating polymer strands to pellets made of a polymer core being coated with at least one layer of a polymeric and/or non-polymeric material in accordance with one embodiment of the present invention.

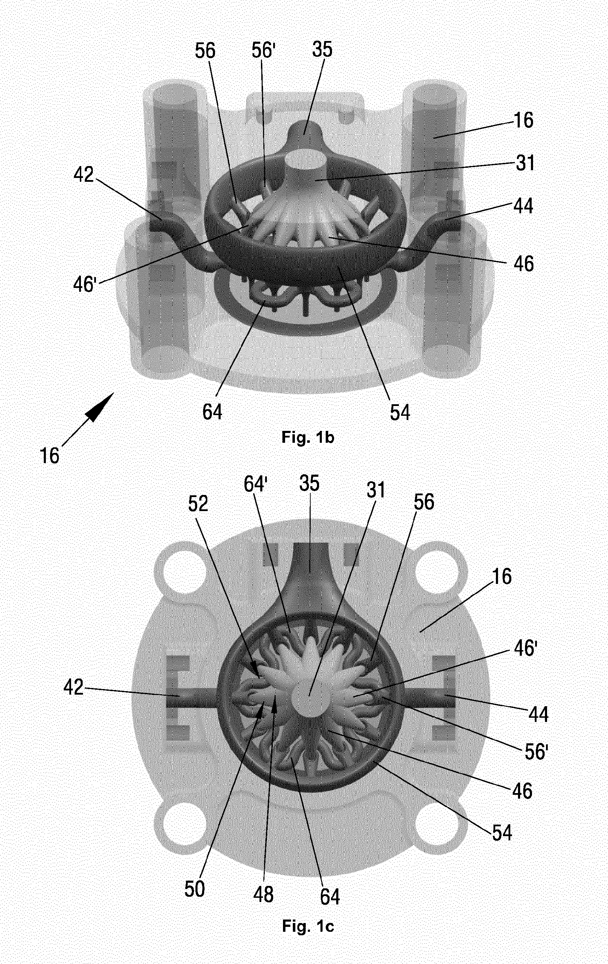

- Fig. 1b: is a schematic perspective view of the die of the granulating device shown in figure 1a.
- Fig. 1c: is a schematic top view of the die of the granulating device shown in figure 1a.
- Fig. 1 d: is a schematic side view of the lower part of the die of the granulating device shown in figure 1a.
- Fig. 1e: is a schematic perspective view of a pellet being produced with the granulating device shown in figure 1a.
- Fig. 1f: is a schematic cross-sectional view of a pellet shown in figure 1e.
- Fig. 2a: is a schematic perspective view of the die of a granulating device in accordance with another embodiment of the present invention.
- Fig. 2b: is a schematic top view of the die of the granulating device shown in figure 2a.
- Fig. 3a: is a schematic perspective view of the die of a granulating device in accordance with another embodiment of the present invention.
- Fig. 3b: is a schematic top view of the die of the granulating device shown in figure 3a.
- Fig. 4a: is a schematic perspective view of the die of a granulating device in accordance with another embodiment of the present invention.
- Fig. 4b: is a detailed view of a section of the die of the granulating device shown in figure 4a.
- Fig. 5a: is a schematic perspective view of the die of a granulating device in accordance with another embodiment of the present invention.
- Fig. 5b: is a detailed view of a section of the die of the granulating device shown in figure 4a.

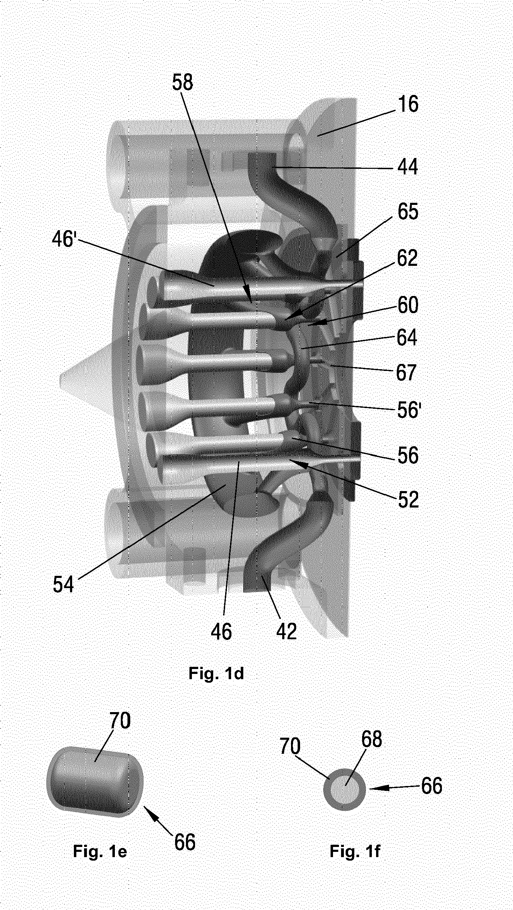

The granulating device 10 for granulating polymer strands to expanded pellets made of a polymer core being coated with at least one layer of a polymeric and/or non-polymeric material shown in figure 1 comprises a first extruder 12, a second extruder 14, a die 16 comprising a die body 16a and a die plate 16b and an underwater granulation unit 18 comprising a water chamber 20 and a blade head 22, wherein the blade head 22 comprises a plurality of blades 24. The first extruder 12 comprises an inlet line 26 for the polymer forming the polymer core of the pellets, an inlet line 28 for blowing agent and an outlet line 30 leading into the die body16a. Likewise, the second extruder 14 comprises an inlet line 32 for the polymeric and/or non-polymeric material and an outlet line 34 leading into the die body 16a. The die 16 has a cylindrical form and comprises an outlet side 36 comprising the die outlets (not shown in figure 1a) in the die plate 16b, an (here opposite) inlet side 38 and a peripheral area 40. While the outlet line 30 of the first extruder 12 enters the die body 16a on its inlet side 38, the outlet line 34 of the second extruder 14 enters the die body 16a on its peripheral area 40. In addition, the die body 16a is connected on its peripheral area 40 with an inlet line 42 for heating medium and with an outlet line 44 for heating medium.

As in more detail shown in figures 1b to 1d, the inlet line 31 of the die body 16a for the polymer forming the polymer, which is connected with the outlet line 30 of the first extruder, core splits-off into a plurality of first-kind die channels 46, 46'. More specifically, each of the first-kind die channels 46, 46', which splits-off form the inlet line 31, comprises an upper first section 48 being connected with the inlet line 31 and extending in an angle of about 45° with regard to the axial direction of the die 16, a second section 50 being connected with a first end with the first section 48 and being curved so that its second, opposite end extends essentially parallel to the axial direction of the die 16, and an end section 52 being connected with the second end of the second section 50. Furthermore, the inlet line 35 of the die 16 for the polymeric and/or non-polymeric material, which is connected with the outlet line 34 of the second extruder and which enters the die body 16a at its peripheral area 40, is connected with an annular ring channel 54, from which a plurality of second-kind die channels 56, 56' split-off. The second-kind die channels 56, 56' comprise each a first section 58 and an end section 60. The end section 60 of a second-kind die channel 56, 56' surrounds an end section 52 of a first-kind die channel 46, 46' so that the end section 52 of the first-kind die channel 46, 46' and the end section 60 of the second-kind die channel 56, 56' form a combined die channel 62 ending at the outlet side of the die as die outlet. The combined die channels 62 are each step-wise tapered from the upstream end to the downstream end (which is the die outlet). In other words, each of the combined die channels 62 comprises a first upstream section having over its length the same diameter, a second section downstream thereof with a gradually decreasing diameter from its upstream end to its downstream end, and a third section downstream thereof having over its length the same diameter. In addition, the inlet line 42 for heating medium and the outlet line 44 for heating medium are connected with each other by two serpentine-shaped heating channels 64, 64'. The two serpentine-shaped heating channels 64, 64' are formed so that they partially surround all of the combined die channels 62. More specifically, the serpentine-shaped heating channels 64, 64' meander around the combined die channels 62, wherein about 60% of the outer circumference of each combined die channel 62 are close to the heating channels 64, 64', namely preferably at a distance of 1 to 10 mm and more preferably 3 to 6 mm. A section extending over about 40% of the lengths of each of the combined die channels 62 is surrounded by the heating channels 64, 64'. Finally, an insulation pocket 65 or insulation layer 65, respectively, is arranged in a distance of about 1 to 20 mm upstream of the outlet side 36 of the die plate 16b, wherein the insulation layer 65 has the form and dimensions of the outlet side 36 of the die plate 16b except that slits 67 comprising holes for the combined end channels 62 forming the die outlets are provided within the insulation layer 65.

During the operation of the granulating device 10, a first polymer is fed into the heated first extruder 12 via the inlet line 26 and an optional blowing agent is fed into the heated first extruder 12 via the inlet line 28 so as to generate therein a mixture of a polymer melt, in which the optional blowing agent is homogenously distributed. Furthermore, a second polymer is fed into the second extruder 14 via the inlet line 32 so as to generate therein a melt of the second polymer. The mixture of the polymer melt, in which the optional blowing agent is homogenously distributed, is fed via the inlet line 31 into the die 16 and is then led through the first-kind die channels 46, 46'. The melt of the second polymer is fed via the inlet line 35 into the die 16 and is then led through the second-kind die channels 56, 56'. The mixture flows through the first-kind die channels 46, 46' into the combined die channels 62 and the melt of the second polymer flows through the second-kind die channels 56, 56' into the combined die channels 62. On account of the inertia of the mixture of the polymer melt, in which the optional blowing agent is homogenously distributed, on account of the pressure with which the mixture is pressed through the first-kind die channels 46, 46' and on account of the temperature of being slightly above its melting point with which the mixture is pressed through the first-kind die channels 46, 46', the mixture being pressed through the first-kind die channels 46, 46' does not or at least not notably mix in the combined die channels 62 with the melt of the second polymer being pressed through the second-kind die channels 56, 56'. Due to this, a strand of a molten polymer core, in which optional blowing agent is homogenously distributed, being coated with a layer of a molten second polymer exits each of the die outlets and enters the water bath 20, in which the strand is cooled and solidified. In the case of a blowing agent in the core, however, the blowing agent expands or foams, respectively the core of the strand before the solidification is completed and the strand is cut by the blades 24 into the expanded pellets 66, each of which having, as shown in schematic perspective view and in schematic cross-sectional view in figures 1e and 1f, core 68 of an expanded first polymer and a coating layer 70 of a second polymer.

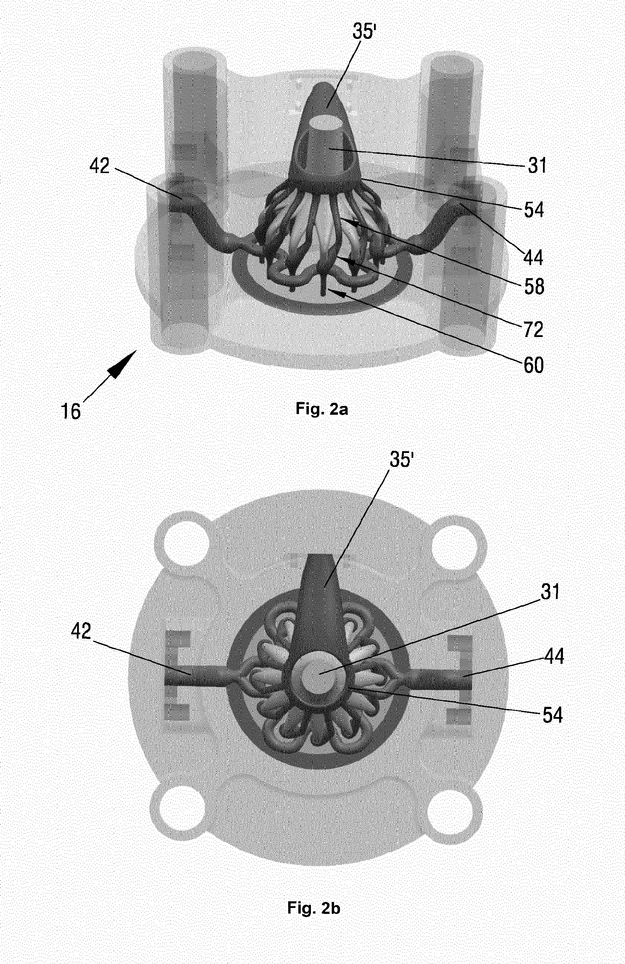

The die 16 shown in figures 2a and 2b is similar to that shown in figures 1b to 1c. However, it differs therefrom in that the annular ring channel 54 downstream of the inlet 34 for the polymeric and/or non-polymeric material has a smaller diameter than that of the embodiment described above. In the embodiment shown in figures 2a and 2b therefore each of the plurality of second-kind die channels 56, 56' splitting-off from the annular channel 54 comprises an upper first section 58 being connected with the annular ring channel 54 and extending in an angle of about 30° with regard to the axial direction of the die 16, a second section 72 being connected with a first end with the first section 58 and being curved so that its second, opposite end extends essentially parallel to the axial direction of the die 16, and an end section 60 being connected with the second end of the second section 72.

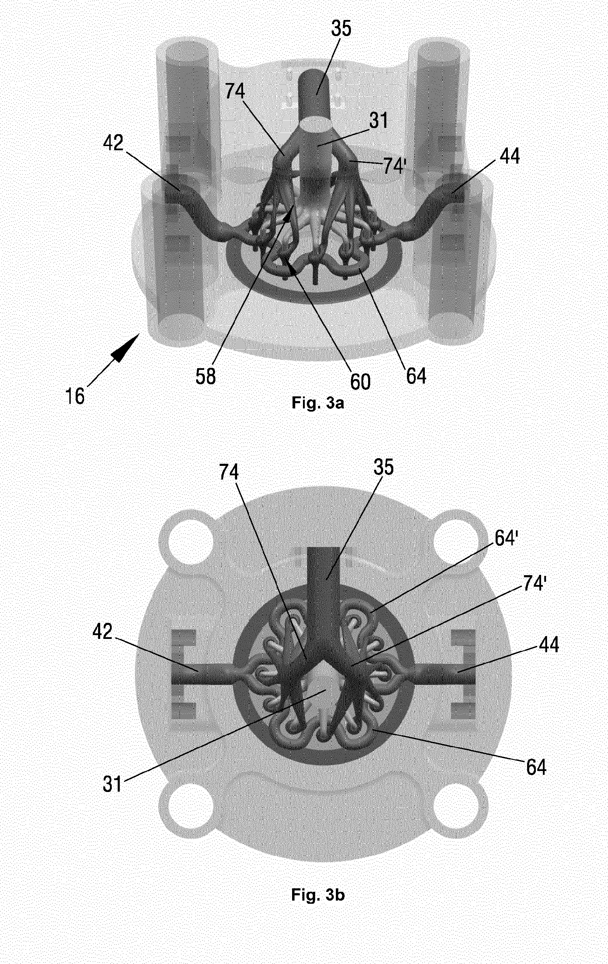

The die 16 shown in figures 3a and 3b does not comprise an annular ring channel 54. On the contrary, the inlet line 35 for the polymeric and/or non-polymeric material splits-off in two inlet sub-lines 74, 74', wherein the second-kind die channels 56, 56' split-off from these two inlet sub-lines 74, 74'. Also, the second-kind die channels 56, 56' of this embodiment may comprise each a first section 58 and the end section 60, which form with the end section 52 of a first-kind die channel 46, 46' a combined die channel 62, wherein the first section 58 connects the end section 60 of the second-kind die channels 56, 56' with one of the inlet sub-lines 74, 74', which splits-off form the inlet line 35. The first sections 58 of the second-kind die channels 56, 56' have preferably a cylindrical form.

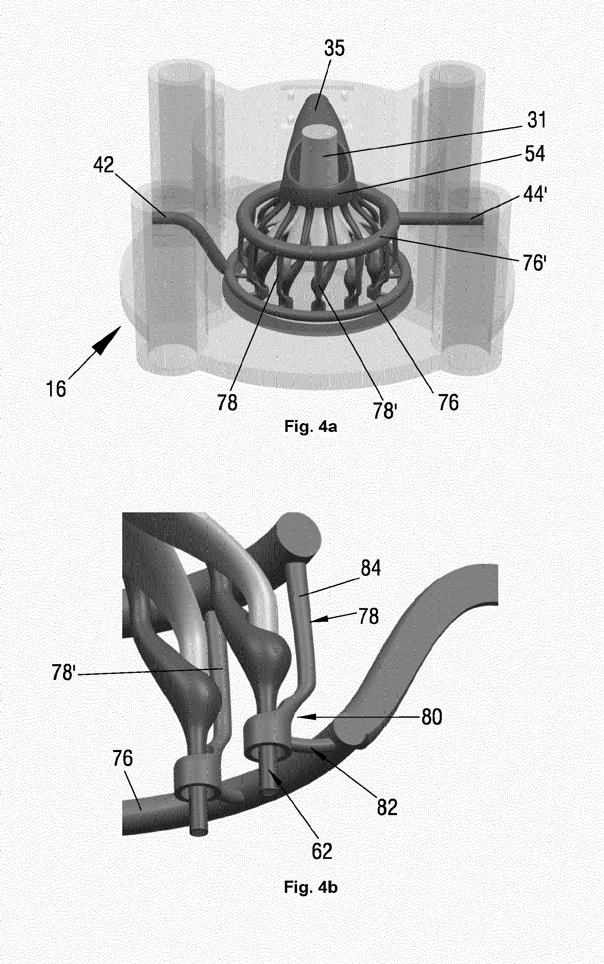

The die 16 shown in figures 4a and 4b is similar to those shown in figures 2a and 2b. However, it differs therefrom in that the die 16 does not comprise two serpentine-shaped heating channels 64, 64'. On the contrary, the inlet line 42 for heating medium and the outlet line 44 for heating medium are connected with each other by two annular heating channels 76, 76'. The two annular heating channels 76, 76' are arranged, seen in the axial direction of the die 16, in a distance to each other and are connected with each other by a plurality of (connecting) heating channels 78, 78', which connect the two annular heating channels 76, 76' and which further completely surround sections of the combined die channels 62. More specifically, the (connecting) heating channels 78, 78' comprises a section 80 having the form of a hollow cylinder and surrounding the outer circumference of a section of a combined die channel 62. The section 80 having the form of a hollow cylinder is connected with a first further section 82 of the heating channel 78 connecting the hollow body-section 80 with one of the two annular heating channels 76 and is furthermore connected with a second further section 84 of the heating channel 78 connecting the hollow body-section 80 with the other of the two annular heating channels 76'.

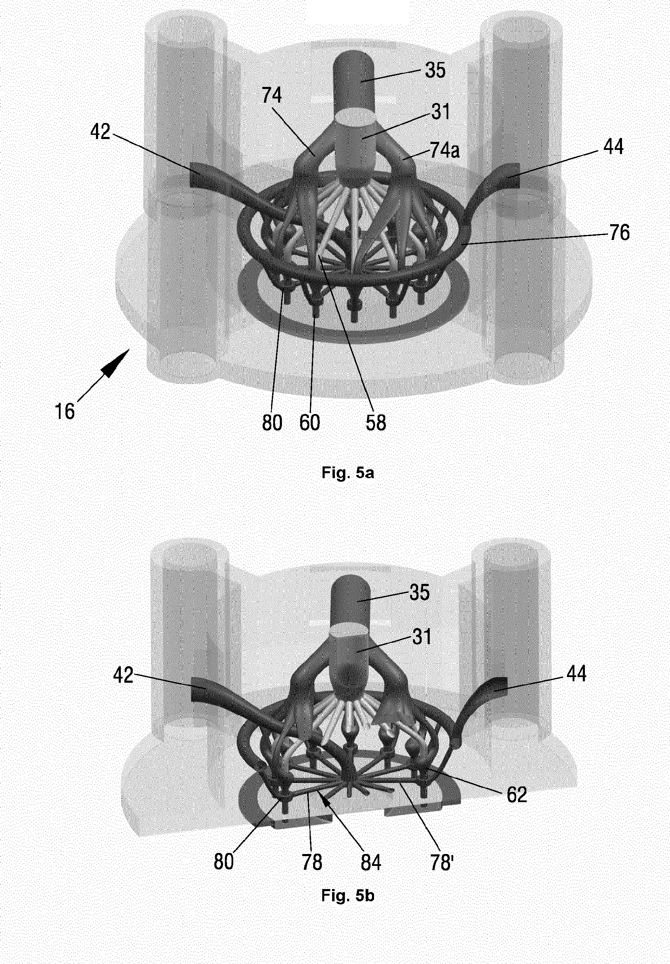

The die 16 shown in figures 5a and 5b differs from that shown in figures 4a and 4b in that the die 16 does not comprise two annular channels 76, 76', but only one annular channel 76 for heating medium. The annular channel 76 for heating medium is not a supply channel, but a collection channel. More specifically, a plurality of non-annular heating channels 84 splits-off from the inlet line 42 for heating medium. Each of the non-annular heating channels 84 comprises a connecting section 78, 78' and a further section 80 in form of a hollow cylinder surrounding the outer circumference of a section of a combined die channel 62, wherein each connecting section 78, 78' is arranged between the inlet line 42 for heating medium and a section in form of a hollow cylinder 80. Each of the further sections 80 in form of a hollow cylinder concentrically surrounds an outer circumference of a section of a combined die channel 62 preferably in a distance of 1 to 10 mm and more preferably of 3 to 6 mm. Each further (heating channel) section in the form of a hollow body 80 of this embodiment is connected with its end being opposite to that being connected with the connecting section 78, 78' with a collection channel 76, which has the form of an annular ring. The collection channel 76 is, in turn, connected with the outlet 44 for heating medium.

### Reference Numeral List

- 10: Granulating device
- 12: First extruder
- 14: Second extruder
- 16: Die
- 16a: Die body
- 16b: Die plate
- 18: (Underwater) Granulation unit
- 20: Water chamber
- 22: Blade head
- 24: Blade
- 26: Inlet line for polymer forming the polymer core into the first extruder
- 28: Inlet line for blowing agent into the first extruder
- 30: Outlet line of first extruder
- 31: Inlet line for polymer forming the polymer core into the die
- 32: Inlet line for polymeric and/or non-polymeric material into the second ex-truder
- 34: Outlet line of second extruder
- 35: Inlet line for polymeric and/or non-polymeric material into the die
- 36: Outlet side of die
- 38: Inlet side of die
- 40: Peripheral area of die
- 42: Inlet line for heating medium
- 44: Outlet line for heating medium
- 46, 46': First-kind die channels
- 48: First section of a first-kind die channel
- 50: Second section of a first-kind die channel
- 52: End section of a first-kind die channel
- 54: Annular ring channel
- 56 56': Second-kind die channel
- 58: First section of a second-kind die channel
- 60: End section of a second-kind die channel
- 62: Combined die channel
- 64, 64': Serpentine-shaped heating channel
- 65: Insulation pocket / insulation layer
- 66: Pellets of a core of an expanded first polymer being coated with a second polymer
- 67: Slits of the insulation layer
- 68: Core of expanded first polymer
- 70: Coating layer of second polymer
- 72: Second section of a second-kind die channel
- 74, 74': Inlet sub-lines
- 76, 76': Annular heating channels
- 78, 78': Connecting heating channels / Connecting sections of heating channels
- 80: First further section of a heating channel having the form of a hollow cylinder
- 82: Second further section of a heating channel having the form of a hollow cylinder
- 84: Non-annular heating channels

## Claims

1. A granulating device for granulating polymer strands to pellets made of a polymer core being coated with at least one layer of a polymeric and/or non-polymeric material, wherein the granulating device comprises:
- at least one melt providing device,
- a die having an inlet side and an outlet side, with the inlet side being connected with the melt providing device, wherein the die comprises:
- at least one inlet line for the polymer forming the polymer core being connected with a plurality of first-kind die channels, wherein each of the first-kind die channels comprises an end section ending at the outlet side of the die,
- at least one inlet line for the polymeric and/or non-polymeric material being connected with a plurality of second-kind die channels, wherein each of the second-kind die channels comprises an end section ending at the outlet side of the die plate, wherein at least 50% of the end sections of the second-kind die channels surrounds an end section of a first-kind die channel so that the end section of the first-kind die channel and the end section of the second-kind die channel form a combined die channel ending at the outlet side of the die as die outlet,
- at least one inlet line and at least one outlet line for heating medium, wherein the at least one inlet line and the at least one outlet line for the heating medium are connected with each other by one or more heating channels, wherein at least 50% of the combined die channels are at least partially surrounded by a heating channel, and
- at least one granulating blade being arranged on the outlet side of the die allowing to cut the strands exiting the die outlets into pellets.

2. The granulating device in accordance with claim 1, wherein at least the end sections of the first-kind die channels and at least the end sections of the second-kind die channels have a circular cross-section, wherein each of the end sections of the second-kind die channels concentrically surrounds an end section of a first-kind die channel so as to form the combined die channel ending at the outlet side of the die as die outlet.

3. The granulating device in accordance with claim 1 or 2, wherein i) at least 70%, preferably at least 80%, more preferably at least 90%, still more preferably at least 95%, yet more preferably at least 99% and most preferably each of the end sections of the second-kind die channels surrounds an end section of a first-kind die channel so that the end section of the first-kind die channel and the end section of the second-kind die channel form a combined die channel ending at the outlet side of the die plate as die outlet, and wherein ii) at least 70%, preferably at least 80%, more preferably at least 90%, still more preferably at least 95%, yet more preferably at least 99% and most preferably all of the combined die channels are at least partially surrounded by a heating channel.

4. The granulating device in accordance with any of the preceding claims, wherein, seen in the cross-section of the die, the distance between the outer circumference of a combined die channel and the outer circumference of a heating channel is in the area, in which the combined die channel is surrounded by the heating channel, 1 to 10 mm and preferably 3 to 6 mm.

5. The granulating device in accordance with any of the preceding claims, wherein at least 10%, preferably at least 25%, more preferably at least 40% and most preferably at least 50% or at least 75%, preferably at least 90%, more preferably at least 95% and most preferably all of the outer circumference of at least a section of a combined die channel is surrounded by a heating channel, wherein the section of the combined die channel being surrounded by a heating channel extends preferably over 10 to 90%, preferably 15 to 60% and most preferably 20 to 45% of the length of the combined die channel.

6. The granulating device in accordance with any of the preceding claims, wherein the one or more heating channels have each a meander-form and preferably a serpentine-form.

7. The granulating device in accordance with claims 1 to 5, wherein the die comprises at least one inlet line and at least one outlet line for heating medium, which are both connected with each other by an annular heating channel, wherein from the annular heating channel a plurality of heating channels split-off, each of which at least partially and preferably completely surrounding at least a section of a combined die channel.

8. The granulating device in accordance with claims 1 to 5, wherein the die comprises at least one inlet line and at least one outlet line for heating medium, which are both connected with each other by two annular heating channels, wherein the two annular heating channels are arranged, seen in the axial direction of the die, with a distance to each other and are connected with each other by a plurality of heating channels, each of which at least partially and preferably completely surrounding a section of a combined die channel.

9. The granulating device in accordance with any of the preceding claims, wherein the first-kind die channels each comprise a first section being connected with the inlet line and extending in an angle of 10 to 90° and preferably 30 to 60° or 70 to 90° with regard to the axial direction of the die, a second section having a first end being connected with the first section at its end being opposite to the end of the first section being connected with the inlet and having a second end, wherein the second section is curved so that its second end extends at least essentially parallel to the axial direction of the die, and an end section being connected with the second end of the second section.

10. The granulating device in accordance with any of the preceding claims, wherein the second-kind die channels each comprise a first section being connected with the inlet line and extending in an angle of 1 to 90° and preferably 1 to 20° with regard to the axial direction of the die a second section having a first end being connected with the first section at its end being opposite to the end of the first section being connected with the inlet and having a second end, wherein the second section is curved so that its second end extends at least essentially parallel to the axial direction of the die, and an end section being connected with the second section.

11. The granulating device in accordance with any of claims 1 to 9 or 10, wherein the die comprises one inlet line for the polymeric and/or non-polymeric material, which is connected with an annular ring channel, wherein from the annular ring channel a plurality of the second-kind die channels split-off.

12. A process for producing a granulating device in accordance with any of the preceding claims, wherein the die is produced with an additive manufacturing process, wherein the additive manufacturing process is i) a powder-bed fusion process, ii) a material extrusion process of metals comprising as step 1 the fabrication of a green part using a material extrusion process and as step 2 the debindering and sintering of the green part produced in step 1, iii) a binder jetting process of metals comprising as step 1 the fabrication of a green part using a binder jetting process with metal powder and as step 2 the debindering and sintering of the green part produced in step 1, or iv) a wire- or powder-based laser metal deposition.

13. A process for producing pellets comprising a polymer core being coated with at least one layer of a polymeric and/or non-polymeric material, wherein the process is performed with the granulating device in accordance with any of claims 1 to 11 and comprises the steps of feeding the polymer forming the polymer core into the at least one inlet line for the polymer forming the polymer core, feeding the polymeric and/or non-polymeric material into the at least one inlet line for the polymeric and/or non-polymeric material, feeding heating medium into the at least one inlet line and withdrawing heating medium from the at least one outlet line for heating medium and cutting the strands exiting the die outlets of the die plate with the at least one granulating blade to the pellets.

14. A pellet comprising a polymer core being coated with at least one layer of a polymeric and/or non-polymeric material obtainable with a process in accordance with claim 13.

15. The pellet in accordance with claim 14, wherein the pellet has a diameter of at most 10 mm, preferably of 0.1 to 7 mm, more preferably of 1 to 5 mm and most preferably of 1 to 3 mm, and/or, wherein the core and/or any of the at least one layer of a polymeric and/or non-polymeric material of the pellet is a foam having a cell size of below 500 µm.
